# EUROPÄISCHE PATENTSCHRIFT

(11) **EP 1 101 135 B1**
(45) Veröffentlichungstag und Bekanntmachung des Hinweises auf die Patenterteilung: **19.01.2005**
(21) Anmeldenummer: 99944313.8
(22) Anmeldetag: 30.07.1999
(51) Int. Cl.: G02B 6/38

(54) **STECKERANORDNUNG FÜR LICHTWELLENLEITER**
PLUG CONNECTOR ARRANGEMENT FOR OPTICAL FIBRES
ENSEMBLE FICHE POUR FIBRES OPTIQUES

(30) Priorität: 03.08.1998 DE 19834986
(43) Veröffentlichungstag der Anmeldung: 23.05.2001
(73) Patentinhaber: Fischer Connectors Holding SA, 1143 Apples (CH)
(72) Erfinder: RITTER, Michel, CH-1112 Echichens (CH); REICHARZ, Armin, CH-1006 Lausanne (CH); WARISLOHNER, Josef, D-85614 Kirchseeon-Eglharting (DE); STEINHAUSER, Michael, D-85560 Ebersberg (DE); BUCHMANN, Stephan, D-85467 Oberneuching (DE)
(74) Vertreter: Besse, François
(86) Internationale Anmeldenummer: PCT/EP1999/005526
(87) Internationale Veröffentlichungsnummer: WO 2000/008502

(56) Entgegenhaltungen:
- EP-A- 0 568 335
- US-A- 5 166 997
- US-A- 5 661 843
- PATENT ABSTRACTS OF JAPAN vol. 011, no. 121 (P-568), 16. April 1987 (1987-04-16) & JP 61 267007 A (SEIKO GIKEN:KK), 26. November 1986 (1986-11-26)

## Beschreibung

Die Erfindung betrifft eine Steckeranordnung für Lichtwellenleiter laut Oberbegriff des Hauptanspruches.

Steckeranordnungen dieser Art sind bekannt (US-PS 5 166 997). Die aus dem Kabelende herausgeführten und auf die Außenfläche der Kabelbefestigungshülse zurückgelegten Kunststoff-Fasern der Lichtwellenleiter-Ummantelung sind dabei nur zwischen dieser Kabelbefestigungshülse und der weiteren Hülse eingeklemmt. Bei einer ähnlichen Steckeranordnung ist es zwar schon bekannt, die Kabelbefestigungshülse mit der Außenseite des Kabels zu verkleben (JP-A-61-267007), die Kunstoff-Fasern der Ummantelung sind jedoch auch hier nur wieder zwischen der Kabelbefestigungshülse und dem Steckergehäuse eingeklemmt. Diese Klemmbefestigung der Kunststoff-Fasern der Lichtwellenleiter-Ummantelung stellt nicht sicher, daß die empfindlichen Glasfasern der Lichtwellenleiter innerhalb des Steckergehäuses völlig spannungsfrei ohne Zug- oder Druckbelastung vom Kabelende zu den Steckerstiften am Einsteckende des Steckers gehalten sind. Es besteht die Gefahr, daß sich die Klemmbefestigung löst oder nicht richtig angebracht wird und dann die empfindlichen Glasfasern beschädigt werden.

Es ist daher Aufgabe der Erfindung, eine Steckeranordnung für Lichtwellenleiter aufzuzeigen, bei der die empfindlichen Lichtwellenleiter durch eine einfache und preiswert herstellbare Anordnung im Steckergehäuse spannungsfrei geführt sind.

Diese Aufgabe wird ausgehend von einer Steckeranordnung laut Oberbegriff des Hauptanspruches durch dessen kennzeichnende Merkmale gelöst. Vorteilhafte Weiterbildungen ergeben sich aus den Unteransprüchen.

Gemäß der Erfindung wird vor dem Einbau des Kabels in das Kabelgehäuse auf das Kabelende eine Hülseneinheit bestehend aus zwei zusammenpassenden Hülsen aufgeklebt, wobei zwischen diesen beiden Einzelhülsen die Enden der die

Lichtwellenleiter im Kabel ummantelnden Aramidfasern mit eingeklebt werden. Dadurch wird bereits vor der Montage ein sauberes Kabelende geschaffen, bei dem die Ummantelungsfasern des Kabels gleichmäßig in die Hülseneinheit eingeklebt sind und dadurch bereits eine gleichmäßige Zugentlastung sichergestellt ist. Durch die beiden zusammenwirkenden Hülsenteile kann die Verklebung unter Druck erfolgen, so daß eine feste Verbindung der Hülsenteile miteinander und mit den Aramidfasern sowie dem Kabelende erreicht wird. Als besonders vorteilhaft hat es sich erwiesen, zwischen der verdrehungssicher am Kontaktträger gehaltenen Lötfensterhülse und der auf das Kabelende aufgesetzten Hülseneinheit eine verdrehungssichere Verzahnung vorzusehen und diese so auszubilden, daß zu deren Ineingriffbringen keine Axialbewegung, sondern nur eine seitliche Radialbewegung erforderlich ist.

Die Erfindung wird im Folgenden anhand schematischer Zeichnungen an zwei Ausführungsbeispielen näher erläutert.

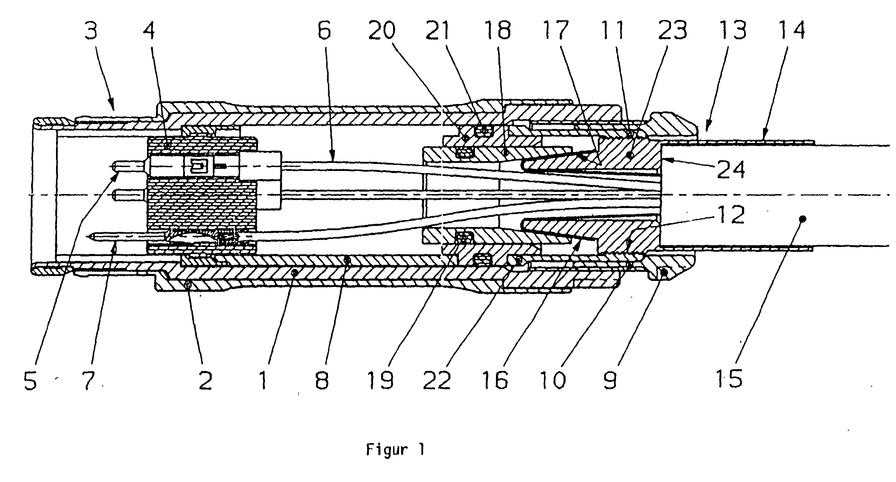

Figur 1 zeigt im Schnitt und im vergrößerten Maßstab ein erstes Ausführungsbeispiel einer erfindungsgemäßen Steckeranordnung bestehend aus einem zylindrischen Steckergehäuse 1 aus Metall, auf dem eine axial verschiebbare zylindrische Steckersieherung 2 aufgesetzt ist. Am Einsteckende 3 des Steckers ist ein Kontaktträger 4 vorgesehen, in welchem die Steckerstifte 5 für die Lichtwellenleiter 6 und ggfs. auch zusätzliche elektrische Kontaktstifte 7 eingesetzt sind. Dieser Kontaktträger 4 wird über eine im Gehäuse eingesetzte, nicht vollständig geschlossene Lötfensterhülse 8, auf die eine am Kabelanschlußende eingeschraubte Spannmutter 9 in axialer Richtung wirkt, im Gehäuse gehalten. Die Spannmutter 9 ist über ein Außengewinde in das Ende des Steckergehäuses 1 eingeschraubt. Sie drückt mit ihrem inneren Rand 10 auf das Ende einer Spannzange 11, die mit ihren durch Schlitze gebildeten Spannfingern über eine Innenverzahnung mit einer Außenverzahnung 12 einer Kabelbefestigungshülse 13 aus Metall zusammenwirkt. Diese Kabelbefestigungshülse 13 ist mit ihrem dünnwandigen zylindrischen Abschnitt 14 über das Ende 15 des anzuschließenden Kabels geschoben, in welchem unter Zwischenlage von Kunststofffasern 16 der oder die Lichtwellenleiter 6 geführt sind, von denen in der Figur der Übersichtlichkeit halber nur ein einziger dargestellt ist. Innerhalb der Kabelbefestigungshülse 13 ist zwischen dem dünnwandigen Abschnitt 14 und einem vorderen etwas dickwandigeren Abschnitt 23 eine Anschlagschulter 24 ausgebildet. Die Außenseite des dickwandigeren Abschnitts 23 der Hülse 13 ist als Konus 17 ausgebildet, die Innenseite des Abschnitts 23 ist zylindrisch. Auf den Konus 17 paßt der Innenkonus einer weiteren Hülse 18 aus Metall, die außen zylindrisch ist und in einer umlaufenden Ringnut 19 einen O-Ring als Dichtung aufweist. Zwischen der zylindrischen Außenfläche dieser Hülse 18 und dem Steckergehäuse 1 ist ein weiterer Dichtring 20 aus Metall eingesetzt, der mit seiner inneren Zylinderfläche am Dichtring 19 anliegt und der seinerseits in einer äußeren Ringnut 21 einen O-Dichtring gegenüber der Innenseite des Steckergehäuses aufweist. Das Ende 22 der Spannzange 11 stützt sich an diesem Dichtring 20 ab, der damit seinerseits zwischen der Lötfensterhülse 8 und diesem Ende 22 der Spannzange 11 eingespannt ist.

Zur Montage der dargestellten Steckeranordnung werden zunächst nach dem Abschneiden des Kabelmantelendes der oder die Lichtwellenleiter 6 und die Kunststofffasern 16 freigelegt. Dann wird unter Zwischenlage eines Klebers die Kabelbefestigungshülse 13 mit ihrem dünnwandigen Abschnitt 14 auf das Kabelende 15 aufgesetzt, bis die Schulter 24 an der abgeschnittenen Kabelmantelstirnfläche zum Anschlag kommt. Die Hülse 13 wird auf diese Weise mit dem Kabelende fest verklebt. Als Kleber hierfür sind alle im Zusammenhang mit solchen Lichtwellenleiteranordnungen üblichen Kleber geeignet. Die Dicke des Abschnitts 23 der Hülse 13 ist so gewählt, daß der zylindrische Innendurchmesser der Hülse etwa dem Durchmesser entspricht, auf dem im Kabel die Ummantelungs-Fasern 16 verteilt sind. Die aus der Hülse herausstehenden Kunststofffasern 16 werden über den Rand der Hülse 13 auf die Konusfläche 17 zurückgelegt und dann die Hülse 18 in die dargestellte Stellung aufgeschoben, und zwar wiederum unter Zwischenlage von Klebstoff, so daß die Kunststofffasern 16 mit den beiden Konusflächen der Hülsen 13 und 18 unter Druck verklebt werden. Aus der Klebestelle zwischen den Hülsen 13 und 18 nach außen überstehende Kunststofffasern können nach dem Verkleben abgeschnitten werden.

Auf die Lichtwellenleiter 6, die aus dem so vorbereiteten Kabelende herausstehen, werden dann die Ferrolen für die Befestigung der Lichtwellenleiter an den Steckerstiften 5 angebracht und die gesamte Steckeranordnung kann dann zusammengebaut werden. Am Kabelanschlußende wird der Dichtring 20 zusammen mit der Spannzange 11 eingesetzt und dann die Spannmutter 9 in das Gehäuseende eingeschraubt. Über die Spannzange 11 wird die Verzahnung 12 zwischen Spannzange 11 und Kabelbefestigungshülse 13 arretiert und der Rand 10 der Spannmutter 9 drückt über die Spannzange 11 die Kabelbefestigungshülse 13 zusammen mit dem Kabelende in das Steckergehäuse 1, bis das Ende 22 der Spannzange 11 am Dichtring 20 zum Anschlag kommt. Durch Verändern der axialen Stellung zwischen Spannzange 11 und Kabelbefestigungshülse 13 bei geöffneter Spannzange kann die Position des Kabelendes im Kabelgehäuse justiert werden. Im montierten Zustand wird über die O-Dichtringe 19 und 21 das Innere des Steckergehäuses abgedichtet.

Anstelle des zusätzlichen Dichtringes 20 könnte dieser auch unmittelbar einstückig mi t der Hülse 18 ausgebildet sein. Ein solcher zusätzlicher Dichtring kann unter Umständen auch ganz entfallen, das Ende 22 der Spannzange 11 stützt sich dann unmittelbar am Rand der Lötfensterhülse 8 ab.

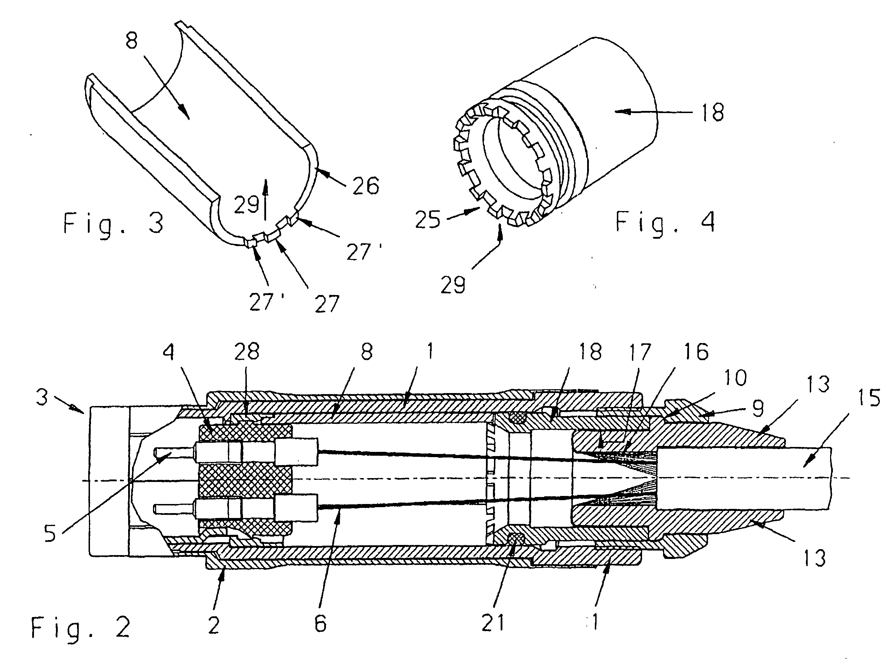

Figur 2 zeigt ein weiteres Ausführungsbeispiel einer erfindungsgemäßen Steckeranordnung, gleiche Teile sind mit gleichen Bezugszeichen wie in Figur 1 gekennzeichnet. Die Lötfensterhülse 8 ist mit ihrem vorderen Ende über einen auf dem Kontaktträger 4 aufgesetzten Metallring 28 formschlüssig, d.h. verdrehungssicher, mit dem Kontaktträger 4 verbunden. Die Lötfensterhülse 8 ist gemäß Figur 3 nur halbschalenförmig ausgebildet und nicht vollständig geschlossen. An ihrer Stirnfläche 26 ist eine Verzahnung 27 ausgebildet, die in dem gezeigten Beispiel aus drei nebeneinander angeordneten schmalen Zähnen besteht, deren seitliche Zahnflächen zueinander parallel verlaufen. Die Zähne besitzen also vom Außenumfang zum Innenumfang hin konstante Breite.

In dem Ausführungsbeispiel nach Figur 2 ist die Außenfläche 17 der Kabelbefestigungshülse 13 zylindrisch ausgebildet und auch die auf die Kabelbefestigungshülse 13 aufgeschobene weitere Hülse 18 besitzt an der Verklebestelle eine zylindrische Innenfläche. Außerdem ist die Hülse 18 einstückig ausgebildet und es ist kein zusätzlicher Dichtring 20 wie in Figur 1 vorgesehen. Auf der Außenseite der Hülse 18 ist eine Ringnut vorgesehen, in welcher ein mit der Innenfläche des Steckergehäuses 1 zusammenwirkender O-Ring 21 als Dichtung eingesetzt ist. Die Stirnfläche der Hülse 18 ist gemäß Figur 4 mit einer kranzförmigen umlaufenden Verzahnung 25 versehen, deren Zähne besitzen anders als die Zähne 27 der Lötfensterhülse 8 einen trapezförmigen Querschnitt, d.h. der Abstand zwischen zwei benachbarten Zähnen ist am Außenumfang größer als am Innenumfang. Die Schlitzbreite zwischen den Zähnen 25 entspricht am Innenumfang der konstanten Breite des mittleren Zahnes der Verzahnung 27, die beiden benachbarten Zähne 27' sind etwas schmaler als der Mittelzahn ausgebildet. Diese Formgebung der Zähne 25 und 27 ermöglicht es, daß bei seitlich nebeneinander angeordneten Bauteilen 8 und 18 die Zähne 27 in radialer Richtung (angedeutet durch den Pfeil 29) in die Verzahnung 25 eingeschoben werden können, ohne daß die beiden Teile 8 und 18 in axialer Richtung verschoben werden müssen. Damit wird beim Zusammenbau der Teile 8 und 18 eine Zug- oder Stauchbelastung der Lichtwellenleiter vermieden. Im montierten Zustand wird durch das Zusammenwirken der Verzahnungen 25, 27 ein Verdrehen der Hülseneinheit 13, 18 gegenüber der Lötfensterhülse 8 und damit auch gegenüber dem Steckergehäuse 1 verhindert.

## Patentansprüche

1. Steckeranordnung mit Lichtwellenleitern, bei der das Ende (15) des die Lichtwellenleiter (6) aufnehmenden Kabels über eine Spannmutter (9) am Kabelanschlußende des Steckergehäuses (1) gehalten ist,
auf dem Kabelende (15) eine Kabelbefestigungshülse (13) und auf dieser eine weitere Hülse (18) aufgesetzt ist, und
die Enden der aus dem Kabelende (15) herausgeführten Kunststofffasern (16) der Ummantelung des Lichtwellenleiters auf die Außenfläche (17) der Kabelbefestigungshülse (13) zurückgelegt und zwischen der Kabelbefestigungshülse (13)
und der weiteren Hülse (18) eingeklemmt sind, **dadurch gekennzeichnet, daß** die am Kabelende (15) herausgeführten Lichtwellenleiter (6) zu Steckerstiften (5) am Einsteckende (3) des Steckergehäuses geführt sind, daß
die Kabelbefestigungshülse (13) auf der Außenseite des Kabels aufgeklebt ist und auch die Kunststofffasern (16) der Lichtwellenleiter-Ummantelung zwischen den beiden Hülsen (13, 18) verklebt sind, und
daß die Spannmutter (9) mit ihrem inneren Rand (10) axial auf die aufgeklebte Hülseneinheit (13, 18) drückt und die dem Einsteckende (3) zugewandte Stirnfläche (25) der aufgeklebten Hülseneinheit (13, 18) mit der Stirnfläche (26) einer im Steckergehäuse (1) angeordneten Lötfensterhülse (8) mechanisch zusammenwirkt, wobei ein Verdrehen der Hülseneinheit gegenüber der Lötfensterhülse und damit auch gegenüber dem Steckergehäuse verhindert wird.

2. Steckeranordnung nach Anspruch 1,
**dadurch gekennzeichnet,**
**daß** die Lötfensterhülse (8) verdrehungssicher mit dem Kontaktträger (4) verbunden ist und die beiden Stirnflächen (25, 26) von Hülseneinheit (13, 18) und Lötfensterhülse (8) formschlüssig zusammenwirken.

3. Steckeranordnung nach Anspruch 2,
**dadurch gekennzeichnet,**
**daß** die Stirnfläche der Hülseneinheit (13, 18) eine kranzförmige Verzahnung (25) und die damit zusammenwirkende Stirnfläche (26) der Lötfensterhülse (8) eine teilkranzförmige Verzahnung (27) aufweist und die zusammenwirkenden Verzahnungen (25, 27) so ausgebildet sind, daß sie ohne Axialverschiebung in radialer Richtung in Eingriff miteinander verbringbar sind.

4. Steckeranordnung nach einem der Ansprüche 1 bis 3,
**dadurch gekennzeichnet,**
**daß** zwischen Außenseite der aufgeklebten Hülseneinheit (13, 18) und der Innenseite des Steckergehäuses (1) ein Dichtring (21) angeordnet ist.

5. Steckeranordnung nach einem der vorhergehenden Ansprüche,
**dadurch gekennzeichnet,**
**daß** die Kabelbefestigungshülse (13) an ihrem Ende außen als Konus (17) ausgebildet ist und die Innenfläche der aufgesetzten weiteren Hülse (18) auf der Innenseite eine entsprechende Konusfläche aufweist.

6. Steckeranordnung nach einem der vorhergehenden Ansprüche,
**dadurch gekennzeichnet,**
**daß** auf der Außenseite der Kabelbefestigungshülse (13) eine Verzahnung (12) ausgebildet ist, die mit einer Verzahnung einer durch die Spannmutter (9) im Steckergehäuse (1) gehaltenen Spannzange (11) zusammenwirkt.

7. Steckeranordnung nach Anspruch 6,
**dadurch gekennzeichnet,**
**daß** zwischen der am Kabelende (15) aufgeklebten Hülseneinheit (13, 18) und der Innenseite des Steckergehäuses (1) ein zusätzlicher Dichtring (20) angeordnet ist, der am Steckergehäuse (1, 8) axial abgestützt ist und die Stützfläche für das innere Ende (22) der Spannzange (11) bildet.

8. Steckeranordnung nach einem der vorhergehenden Ansprüche,
**dadurch gekennzeichnet,**
**daß** sowohl die Kabelbefestigungshülse (13) als auch die darauf aufgesetzte und damit verklebte weitere Hülse (18) jeweils aus Metall bestehen.

## Claims

1. Plug arrangement having optical waveguides, in which the end (15) of the cable accommodating the optical waveguides (6) is held at the cable terminal end of the plug casing (1) by a clamping nut (9),
a cable fixing sleeve (13) is mounted on the cable end (15) and a further sleeve (18) is mounted on the cable fixing sleeve (13), and
the ends of the plastic fibres (16) of the cladding of the optical waveguide that are brought out of the cable end (15) are laid back onto the external surface (17) of the cable fixing sleeve (13) and are clamped between the cable fixing sleeve (13) and the further sleeve (18), **characterized in that** the optical waveguides (6) that extend out at the cable end (15) are routed to plug pins (5) at the insertion end (3) of the plug casing, **in that** the cable fixing sleeve (13) is bonded on the outside of the cable and the plastic fibres (16) of the optical waveguide cladding are also bonded between the two sleeves (13, 18), and **in that** the internal edge (10) of the clamping nut (9) presses axially against the bonded-on sleeve unit (13, 18) and the end face (25) of the bonded-on sleeve unit (13, 18), that is adjacent to the insertion end (3), interacts mechanically with the end face (26) of a solder window sleeve (8) disposed in the plug casing (1), twisting of the sleeve unit with respect to the solder window sleeve and, consequently, also with respect to the plug casing being prevented.

2. Plug arrangement according to Claim 1, **characterized in that** the solder window sleeve (8) is joined in a twist-proof manner to the contact carrier (4) and the two end faces (25, 26) of the sleeve unit (13, 18) and the solder window sleeve (8) interact in a shape-locked manner.

3. Plug arrangement according to Claim 2, **characterized in that** the end face of the sleeve unit (13, 18) has a crown-shaped tooth structure (25) and the end face (26) of the solder window sleeve (8) that interacts therewith has a partial crown-shaped tooth structure (27) and the interacting tooth structures (25, 27) are designed so that they can be enmeshed with one another without axial displacement in the radial direction.

4. Plug arrangement according to one of Claims 1 to 3, **characterized in that** a sealing ring (21) is disposed between the outside of the bonded-on sleeve unit (13, 18) and the inside of the plug casing (1).

5. Plug arrangement according to one of the preceding claims, **characterized in that** the cable fixing sleeve (13) is designed at its end as a cone (17) on the outside and the internal surface of the mounted further sleeve (18) has a matching conical surface on the inside.

6. Plug arrangement according to one of the preceding claims, **characterized in that** a tooth structure (12) that interacts with a tooth structure of a collet (11), held in the plug casing (1) by the clamping nut (9), is formed on the outside of the cable fixing sleeve (13).

7. Plug arrangement according to Claim 6, **characterized in that** an additional sealing ring (20) which bears axially on the plug casing (1, 8) and forms the bearing surface for the internal end (22) of the collet (11), is disposed between the sleeve unit (13, 18) bonded-on at the cable end (15) and the inside of the plug casing (1).

8. Plug arrangement according to one of the preceding claims, **characterized in that** both the cable fixing sleeve (13) and the further sleeve (18), mounted thereon and bonded thereto, are made of metal.

## Revendications

1. Agencement de fiche pour guides d'ondes optiques, dans lequel l'extrémité (15) du câble qui loge les guides d'ondes optiques (6) est maintenue par un écrou de serrage (9) contre l'extrémité de raccordement de câble du boîtier de fiche (1),
dans lequel une douille (13) de fixation du câble et sur cette dernière une autre douille (18) sont placées sur l'extrémité (15) du câble, les extrémités des fibres (16) en matière synthétique de l'enveloppe du guide d'ondes optiques sorties de l'extrémité (15) du câble étant rabattues sur la surface extérieure (17) de la douille (13) de fixation du câble et serrées entre la douille (13) de fixation du câble et l'autre douille (18), **caractérisé en ce que** les guides d'ondes optiques (6) extraits de l'extrémité (15) du câble sont guidés vers des bornes (5) de fiche à l'extrémité d'insertion (3) du boîtier de fiche,
**en ce que** la douille (13) de fixation du câble est collée sur le côté extérieur du câble et les fibres (16) en matière synthétique de l'enveloppe du guide d'ondes optiques sont collées entre les deux douilles (13, 18) et
**en ce que** l'écrou de serrage (9) repousse axialement par son bord intérieur (10) l'unité de douilles (13, 18) collée et la surface frontale (25) de l'unité de douilles (13, 18) collée, qui est tournée vers l'extrémité d'insertion (3), coopérant avec la surface frontale (26) d'une douille (8) à fenêtre de soudage disposée dans le boîtier (1) de la fiche, la rotation de l'unité de douilles par rapport à la douille à fenêtre de soudage et donc également par rapport au boîtier de la fiche étant empêchée.

2. Agencement de fiche selon la revendication 1, **caractérisé en ce que** la douille (8) à fenêtre de soudage est reliée au porte-contacts (4) sans pouvoir tourner, les deux surfaces frontales (25, 26) de l'unité de douille (13, 18) et la douille (8) à fenêtre de soudage coopérant en correspondance géométrique.

3. Agencement de fiche selon la revendication 2, **caractérisé en ce que** la surface frontale de l'unité de douilles (13, 18) présente une denture (25) en forme de couronne et la surface frontale (26) de la douille (8) à fenêtre de soudage, qui coopère avec elle, présente une denture (27) en forme de couronne partielle, les dentures (25, 27) qui coopèrent étant configurées de manière à pouvoir être engagées l'une sur l'autre dans la direction radiale, sans déplacement axial.

4. Agencement de fiche selon l'une des revendications 1 à 3, **caractérisé en ce qu'**entre le côté extérieur de l'unité de douilles (13, 18) collée et le côté intérieur du boîtier (1) de la fiche est disposée une bague d'étanchéité (21).

5. Agencement de fiche selon l'une des revendications précédentes, **caractérisée en ce que** la douille (13) de fixation de câble est configurée extérieurement à son extrémité sous la forme d'un cône (17), la surface intérieure de l'autre douille (18) placée présentant sur son côté intérieur une surface conique correspondante.

6. Agencement de fiche selon l'une des revendications précédentes, **caractérisée en ce qu'**une denture (12) qui coopère avec une denture d'une mâchoire de serrage (11) maintenue dans le boîtier (1) de la fiche par l'écrou de serrage (9) est réalisée sur le côté extérieur de la douille (13) de fixation de câble.

7. Agencement de fiche selon la revendication 6, **caractérisé en ce qu'**entre l'unité de douilles (13, 18) collée sur l'extrémité (15) du câble et le côté intérieur du boîtier (1) de la fiche est disposée une bague d'étanchéité supplémentaire (20) qui s'appuie axialement sur le boîtier (1, 8) de la fiche et qui forme la surface d'appui pour l'extrémité intérieure (22) de la mâchoire de serrage (11).

8. Agencement de fiche selon l'une des revendications précédentes, **caractérisé en ce que** tant la douille (13) de fixation de câble que l'autre douille (18) placée sur la première et collée sur elle sont réalisées en métal.
